## Europäisches Patentamt

## European Patent Office

## Office européen des brevets

(19)

(11) Veröffentlichungsnummer: **0 231 184**
**B1**

(12) **EUROPÄISCHE PATENTSCHRIFT**

(45) Veröffentlichungstag der Patentschrift:
31.05.89

(21) Anmeldenummer: **85905209.4**

(22) Anmeldetag: **25.09.85**

(86) Internationale Anmeldenummer:
**PCT/EP 85/00497**

(87) Internationale Veröffentlichungsnummer:
**WO 86/02602 (09.05.86 Gazette 86/10)**

(51) Int. Cl.⁴: **B 60 J 5/04,** B 60 J 1/08

(54) KRAFTFAHRZEUG MIT WENIGSTENS ZWEI SEITENSCHEIBEN.

(30) Priorität: **02.11.84 DE 3439997**

(43) Veröffentlichungstag der Anmeldung:
**12.08.87 Patentblatt 87/33**

(45) Bekanntmachung des Hinweises auf die Patenterteilung:
**31.05.89 Patentblatt 89/22**

(84) Benannte Vertragsstaaten:
**DE FR GB IT SE**

(56) Entgegenhaltungen:
**FR-A-2 327 904**

**Patent Abstracts of Japan, Band 7, Nr. 98, (M-210)(1243) 26. April 1983**
**Patent Abstracts of Japan, Band 7, Nr. 287, (M-264)(1432) 21. Dezember 1983**

(73) Patentinhaber: **AUDI AG, Postfach 220, D-8070 Ingolstadt (DE)**

(72) Erfinder: **FREUDENBERG, Steffen, Goethestrasse 140, D-8070 Ingolstadt (DE)**

(74) Vertreter: **Engelhardt, Harald, Audi AG Postfach 2 20, D-8070 Ingolstadt (DE)**

## Beschreibung

Die Erfindung bezieht sich auf ein Kraftfahrzeug mit wenigstens zwei Seitenscheiben, gemäß dem Oberbegriff des Anspruchs 1.

Aus der JP-A-5 820 512 ist eine Fahrzeugtüre mit einem Rahmen bekannt, welcher sich bis zu einer sich nach hinten anschließenden, nicht versenkbaren Seitenscheibe erstreckt. Durch den Rahmen wird ein zwischen der vorderen Türe und der hinteren Seitenscheibe angeordneter, etwa senkrechter Karosseriepfosten nach außen hin abgedeckt. Da der Rahmen im Abstand von der hinteren Seitenscheibe endet, entsteht zwischen beiden Bauteilen ein etwa senkrechter Spalt. Dieser Spalt erfordert eine exakte Einstellung der Türe und kann außerdem Windgeräusche verursachen.

Der Erfindung liegt die Aufgabe zugrunde, mit einfachen Mitteln die Ausbildung von Fugen im Fensterbereich zu vermeiden.

Die Aufgabe wird durch die kennzeichnenden Merkmale des Anspruchs 1 gelöst.

Dadurch, daß der die erste Scheibe aufnehmende Rahmen bis zu der sich anschließenden zweite Scheibe geführt ist und die an ihm festgelegte Auflage an der zweiten Scheibe anliegt, werden nach außen offene Fugen vermieden und dadurch Windgeräuschen vorgebeugt. Durch die Anlage des vorderen Rahmens an der sich nach hinten anschließenden Seitenscheibe werden außerdem zeitaufwendige toleranzausmittelnde Einstellarbeiten zur Erzielung gleich breiter Spalte überflüssig.

Durch die erfindungsgemäße Ausbildung wird jedoch nicht nur der Entstehung von Fugen vorgebeugt, sondern auch verbesserte Verhältnisse im Bezug auf die zweite Scheibe geschaffen. Wenn die zweite Scheibe versenkbar ist, dann bildet die Auflage am Rahmen einen Teil der vorderen Führung für diese Scheibe. Die Auflage verändert also auch das Abheben der Scheibe bei hohen Geschwindigkeiten und trägt zur Dämpfung der Scheibenschwingungen bei. Handelt es sich bei der zweiten Scheibe um eine feststehende Scheibe, dann übernimmt die Auflage weitestgehend Abdichtfunktionen.

Die Erfindung ist vorteilhaft einsetzbar bei Personenkraftwagen in deren Fensterbereich beim Übergang von der Vordertüre auf eine hintere Seitentüre, beim Übergang von einer hinteren Seitentüre auf eine sich daran anschließende, feststehende dritte Seitenscheibe oder bei zweitürigen Fahrzeugen beim Übergang von der Fahrer- bzw. Beifahrertüre auf eine feststehende oder versenkbare zweite Seitenscheibe.

Bei Fahrzeugen mit zwei Türen und einem dazwischen angeordneten Karosseriepfosten auf jeder Seite ist es besonders vorteilhaft, wenn die von der hinteren Türe aufgenommene zweite Scheibe oberhalb des Türkörpers nur an ihrer Hinterkante geführt ist und die Vorderkante zwischen je einem Dichtelement am Rahmen der vorderen Türe und einem am Karosseriepfosten aufgenommen ist. Durch die beiden Dichtelemente wird eine echte Führung für die zweite Scheibe geschaffen, ohne das dafür ein separater Rahmen oder eine Führungsschiene erforderlich ist.

Der Gegenstand der Erfindung kann bei den verschiedensten Rahmen für die Scheiben eingesetzt werden, wenngleich die Ausbildung gemäß dem Anspruch 3 bevorzugt wird. So ist es möglich, konventionelle Rahmen, d. h. U-Profile, einzusetzen oder auch Rahmen zu verwenden, welche an der Rückseite der Scheiben angeordnet sind und in welchen die Scheiben mittels Gleitstücken geführt sind. Kombinationen beider Rahmenarten sind genauso möglich, wie der Einsatz eines Rahmens, welcher die Scheibe außerhalb des Türkörpers nur an ihrer Hinterkante führt. Eine solche Scheibenführung, bei welcher die Erfindung besonders vorteilhaft einsetzbar ist, ist beispielsweise in der US-PS-3 703 053 gezeigt.

Schließlich sei noch erwähnt, daß ein Rahmen mit einem U-förmig ausgebildeten Abschnitt zur Führung der ersten Scheibe aus der FR-A-2 327 904 bekannt ist. Das Ausführungsbeispiel dieser Druckschrift zeigt bereits auch eine Ausbildung des Rahmens derart, daß er einen zwischen den Scheiben angeordneten Karosseriepfosten nach außen hin abdeckt. Dieser bekannte Rahmen übergreift jedoch nicht die zweite Scheibe oder liegt gar an dieser dichtend an.

Ein Ausführungsbeispiel der Erfindung ist in der Zeichnung dargestellt und wird nachfolgend näher beschrieben. Es zeigt

Fig. 1    eine vordere und eine hintere Seitentüre eines Personenkraftwagens als Einzelteil,

Fig. 2    die Türen aus Fig. 1, eingebaut in ein Fahrzeug und

Fig. 3    den Schnitt III-III aus Fig. 2.

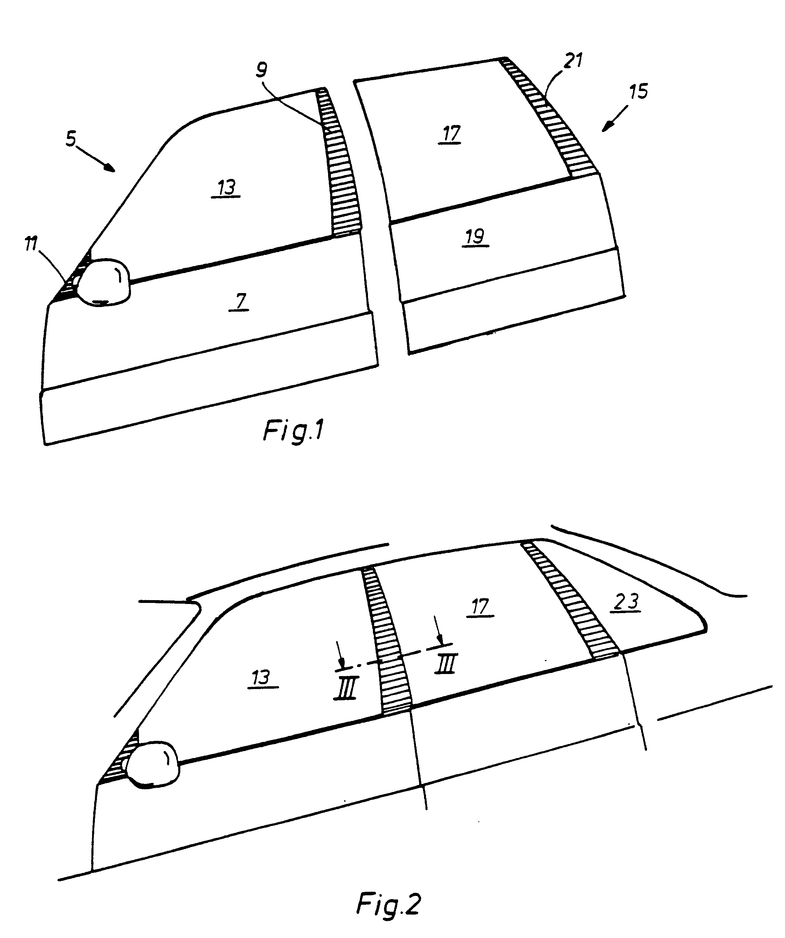

Eine in Fig. 1 dargestellte vordere Türe eines Personenkraftwagens umfaßt einen Türkörper 7, aus dem ein etwa senkrechter Rahmen 9 und ein Spiegeldreieck 11 nach oben vorstehen. Eine versenkbare Scheibe 13 ist außerhalb des Türkörpers 7 nur im Rahmen 9 und im Spiegeldreieck 11 geführt.

Eine hintere Tür 15 ist in Bezug auf die Führung ihrer Scheibe 17 ähnlich aufgebaut, d. h. sie ist außerhalb des Türkörpers 19 nur in einem Rahmen 21 geführt.

Fig. 2 zeigt die Türen 5 und 15 eingebaut in einen Personenkraftwagen. Wie aus dieser Figur unmittelbar ersichtlich, schließt sich im Fensterbereich an die Scheibe 17 der hinteren Tür 15 eine Dreieckscheibe 23 an. Die Scheibe 23 ist im Gegensatz zu den Scheiben 13 und 17 nicht versenkbar und durch Klebung an der Karosserie festgelegt.

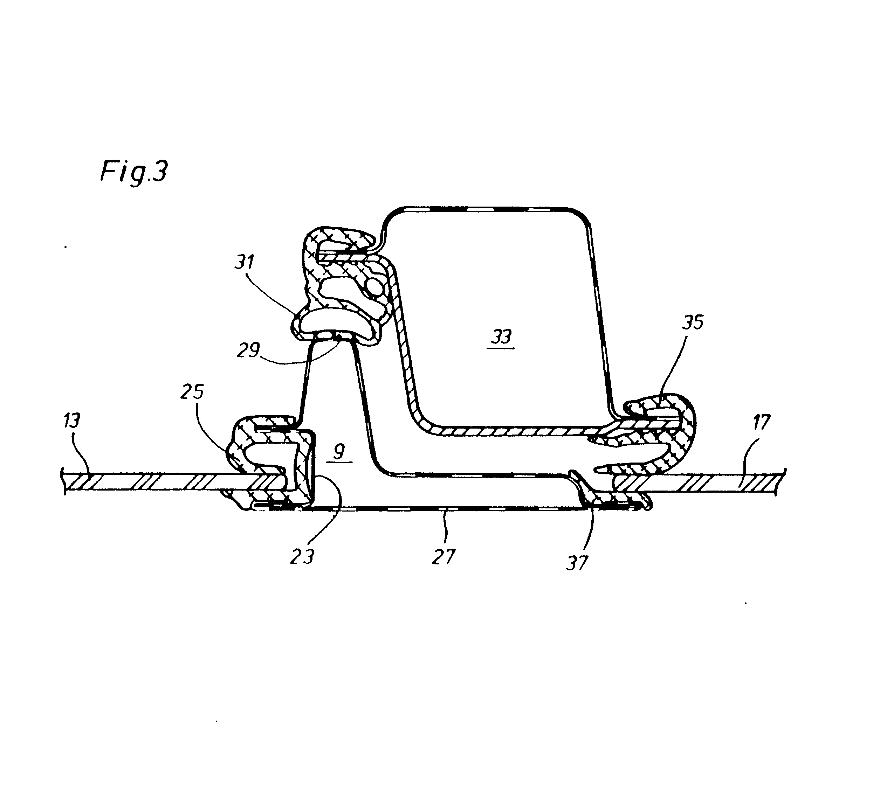

Der in Fig. 3 im Schnitt dargestellte Rahmen 9 der vorderen Tür 5 ist aus Blech hergestellt und umfaßt einen U-förmigen Abschnitt 23, welcher zur Aufnahme der Scheibe 13 eine Dichtung 25 trägt. Die Dichtung 25 in Verbindung mit dem U-förmigen Abschnitt 23 ist so ausgebildet, daß die Scheibe 13 möglichst bündig mit der Außenseite 27 des Rahmens 9 verläuft.

Bei geschlossener Türe 7 legt sich der Rahmen 9 mit einer Fläche 29 an einer Dichtung 31 an, welche an einer Mittelsäule 33 der Fahrzeugkarosserie aufgeschoben ist. Die Mittelsäule 33 wird nach außen hin weitestgehend durch den Rahmen 9 abgedeckt. Auf der der Dichtung 31 gegenüberliegenden Seite der Mittelsäule 33 trägt diese eine weitere Dichtung 35, an welcher bei geschlossener Türe 19 die Scheibe 17 mit ihrer Innenseite anliegt. Die Außenseite der Scheibe 17 wird in deren Randbereich unter Zwischenschaltung einer Auflage 37 durch den Rahmen 9 abgestützt. Sofern die vordere Türe 7 geschlossen ist, bilden die Dichtung 35 und die Auflage 37 eine Führung für die hintere Scheibe 17.

## Patentansprüche

1. Kraftfahrzeug mit wenigstens zwei Seitenscheiben, wobei mindestens eine erste Scheibe in einer Türe angeordnet ist und die Türe einen Rahmen aufweist, welcher die Scheibe zumindest in ihrem hinteren Randbereich entlang einer etwa senkrechten Führungsbahn längsverschieblich führt, wobei der Rahmen den Randbereich einer zweiten Scheibe außen übergreift, welche sich an die im Rahmen geführte erste Scheibe nach hinten anschließt und wobei der Rahmen einen zwischen den Scheiben angeordneten Karosseriepfosten nach außen hin abdeckt, daduch gekennzeichnet, daß der Rahmen (9) an seiner Innenseite mit einer Auflage 37 versehen ist, welche bei geschlossener Türe (5) auf den Randbereich der zweiten Scheibe (17) dichtend anliegt.

2. Kraftfahrzeug nach Anspruch 1 mit zwei Türen und einem dazwischen angeordneten Karosseriepfosten auf jeder Seite, dadurch gekennzeichnet, daß die von der hinteren Türe (15) aufgenommene zweite Scheibe (17) außerhalb des Türkörpers (19) nur an ihrer Hinterkante geführt ist und die Vorderkante zwischen einem Dichtelement (35) am Karosseriepfosten (33) und der Auflage (37) am Rahmen (9) der vorderen Türe (5) aufgenommen ist.

3. Kraftfahrzeug nach Anspruch 1 oder 2, dadurch gekennzeichnet, daß der Rahmen (9) zur Führung der ersten Scheibe (13) einen U-förmig ausgebildeten Abschnitt (23) aufweist.

## Claims

1. Motor vehicle with at least two side panes, in which at least a first pane is positioned in a door and the door has a frame which guides the pane at least at its rear edge part so that it can be moved lengthwise along an approximately vertical guideway, in which the frame overlaps, on the outside, the edge part of a second pane which adjoins the rear of the first pane guided in the frame and in which the frame covers on the outside a vehicle body pillar positioned between the panes, characterized in that the frame (9) is provided on its inner side with a supporting piece (37) which is seated against the edge part of the second pane (17) to form a seal when the door (5) is closed.

2. Motor vehicle according to Claim 1 with two doors and a vehicle body pillar positioned between them on each side, characterized in that the second pane (17) held by the rear door (15) is guided outside the door body (19) only at its rear edge and the front edge is held between a sealing element (35) on the vehicle body pillar (33) and the supporting piece (37) on the frame (9) of the front door (5).

3. Motor vehicle according to Claim 1 or 2, characterized in that the frame (9) for guiding the first pane (13) has a section (23) constructed in a U-shape.

## Revendications

1. Véhicule automobile comportant au moins deux glaces latérales, une première glace au moins étant disposée dans une porte et la porte présentant un cadre qui guide le déplacement longitudinal de la glace, au moins dans la région du bord arrière de celle-ci, le long d'une glissière de guidage à peu près verticale, le cadre recouvrant extérieurement la région du bord d'une seconde glace qui fait suite vers l'arrière à la première glace guidée dans le cadre, et le cadre couvrant vers l'extérieur un montant de carrosserie disposé entre les glaces, caractérisé en ce que le cadre (9) est muni, sur son côté interne, d'un élément d'appui (37) qui s'applique de manière étanche sur la région du bord de la seconde glace (17) lorsque la porte (15) est fermée.

2. Véhicule automobile selon la revendication 1, comportant de chaque côté deux portes et un montant de carrosserie disposé entre celles-ci, caractérisé en ce que la seconde glace (17) reçue par la porte arrière (15) n'est guidée, à l'extérieur du corps de porte (19), qu'au niveau de son bord postérieur, et en ce que son bord antérieur est reçu entre un élément d'étanchéité (35) sur le montant de carrosserie (33) et l'élément d'appui (37) sur le cadre (9) de la porte avant.

3. Véhicule automobile selon la revendication 1 ou 2, caractérisé en ce que le cadre (9) servant au guidage de la première glace (13) présente un segment (23) réalisé en forme d'U.

Fig.1

Fig.2

1

Fig.3